# EUROPEAN PATENT APPLICATION

(11) **EP 4 794 256 A1**
(43) Date of publication of application: **19.08.2026**
(21) Application number: 25157615.3
(22) Date of filing: 13.02.2025
(51) Int. Cl.: H04L 9/08, H04L 9/32

(54) **DEVICE FOR AUTHENTICATING A BLOCK OF DATA**

(71) Applicant: Nagravision Sarl, 1033 Cheseaux-sur-Lausanne (CH)
(72) Inventor: HUNACEK, Didier, 1033 CHESEAUX-SUR-LAUSANNE (CH); PENNING, Yann, 1033 CHESEAUX-SUR-LAUSANNE (CH); PRIMAULT, Gilles, 1033 CHESEAUX-SUR-LAUSANNE (CH); RUIZ, Luis, 1033 CHESEAUX-SUR-LAUSANNE (CH)
(74) Representative: Parker, Andrew James

(57) **Abstract**

A device is proposed for authenticating a block of data as a block of authentic data. A memory of the device is populated with a digital signature resulting of an application of one algorithm, hereafter signature algorithm, to the block of authentic data using a shared key, the signature algorithm being one algorithm among the two complementary algorithms of a symmetric-key cryptographic scheme. The device is configured for:
- obtaining the shared key;
- decrypting the signature using the shared key and the other algorithm than the signature algorithm among the two complementary algorithms of the symmetric-key cryptographic scheme; and
- comparing reference data delivered by said decrypting with test data function of the block of data delivering an information representative of the authenticity of the block of data.

The device is configured for not allowing the use of the shared key with the signature algorithm.

## Description

### 1. FIELD OF THE DISCLOSURE

The field of the disclosure is that of cryptography.

More specifically, the disclosure relates to methods and devices for authenticating data.

The disclosure can be of interest in any field wherein such digital data has to be authenticated. This is the case e.g. for devices embedding a piece of software (SW) to be authenticated before being executed, like e.g. Internet of Things (IoT) devices, set-top boxes (STB), smartphones, computers, etc.

### 2. TECHNOLOGICAL BACKGROUND

Data authentication schemes are mostly based on public-key asymmetric cryptography. Such cryptographic algorithms are based on the difficulty of certain mathematical problems, such as the factorization of large integers (RSA algorithm) or the discrete logarithm problem (used in algorithms like Diffie-Hellman key exchange, Digital Signature Algorithm (DSA) and Elliptic-Curve Cryptography (ECC)). These problems are computationally infeasible for classical computers to solve in a reasonable time frame for sufficiently large key sizes, which provides the security for these systems.

Conversely, quantum computers make use of quantum bits (qubits) that can represent and process a vast amount of data concurrently, thanks to the principles of superposition and entanglement. This gives them the potential to perform certain calculations significantly faster than classical computers. In 1994, Peter Shor devised a quantum algorithm that can efficiently solve the integer factorization problem and the discrete logarithm problem. Once quantum computers reach a sufficient level of sophistication and qubit coherence - known as quantum supremacy - they will be able to break the security of current authentication schemes by using Shor's algorithm or similar quantum algorithms.

Because of the threat posed by quantum computing, there's a need to make existing authentication schemes based on quantum-resistant (also known as post-quantum) algorithms. These new algorithms are designed as asymmetric schemes secure against both classical and quantum computing attacks, thus preserving the confidentiality, authenticity, and integrity of communications and data.

However, those post-quantum algorithms require a huge number of computational resources, which can be a problem for devices with limited computational resources.

Conversely, classical symmetric cryptography is known to be resistant to quantum computing attacks, provided that the shared key is large enough, while requiring a reasonable number of computational resources (at least less than for post-quantum algorithms). However, in such symmetric scheme, the shared key being common for the generation (i.e. for the encryption) of the digital signature and for the decryption of the signature, a user having the shared key for decrypting the signature can potentially use it for generating counterfeit digital signatures. Such symmetric cryptography thus cannot be considered for the authentication of data without additional elements.

There is thus a need for a solution for allowing the authentication of data in a post-quantum context and on devices presenting limited computational resources.

### 3. SUMMARY

A particular aspect of the present disclosure relates to a device for authenticating a block of data as a block of authentic data. A memory of the device is populated with a digital signature resulting of an application of one algorithm, hereafter signature algorithm, to reference data associated with the block of authentic data using a shared key, the signature algorithm being one algorithm among the two complementary algorithms of a symmetric-key cryptographic scheme. The device is configured for:
- obtaining the shared key;
- decrypting the signature using the shared key delivering the reference data associated with the block of authentic data, the decrypting the signature implementing the other algorithm, hereafter verification algorithm, than the signature algorithm among the two complementary algorithms of the symmetric-key cryptographic scheme; and
- comparing the reference data with test data function of the block of data delivering an information representative of the authenticity of the block of data.

The device is configured for not allowing the use of the shared key with the signature algorithm.

Thus, the present disclosure proposes a new and inventive solution for allowing the authentication of data in a post-quantum context with limited computational resources available.

Indeed, symmetric cryptography is known to be resistant to quantum computing attacks, provided that the shared key is large enough, while requiring a reasonable number of computational resources, at least less than post-quantum asymmetric algorithms. Thus, having the device configured for insuring that the shared key cannot be used with the signature algorithm allows preventing from using the device for generating counterfeit digital signatures, e.g. digital signatures associated to corrupted data to be authenticated in place of the block of data to be initially authenticated. Indeed, in this later case the authentication stage would be irrelevant as the digital signature would always comply with the corrupted data.

In some embodiments, the memory of the device is populated with the shared key. The device is configured for associating, with the shared key, rights defining an interdiction to use the shared key with the signature algorithm.

In some embodiments, the device is configured for, when receiving a command for executing a cryptographic algorithm using the shared key: executing the cryptographic algorithm using the shared key only if the cryptographic algorithm is different than the signature algorithm.

In some embodiments, the device implements a key ladder, a given stage of the key ladder being configured for implementing the verification algorithm used for the decrypting the signature.

Thus, the verification algorithm is secured (e.g. the key ladder is implemented in a secure element or a cryptographic element of the device).

In some embodiments, the device is configured for:
- during said obtaining the shared key, having a plurality of successive intermediate stages of the key ladder generating the shared key from a Root key; and
- during said decrypting the signature, having the given stage configured for using the shared key generated by the successive intermediate stages.

Thus, there is no need to store the shared key. The use of the key ladder thus naturally protects the shared key that is kept secret.

In some embodiments, at least one intermediate stage of the key ladder implements a respective algorithm for generating an intermediate key used by a next stage of the key ladder, the respective algorithm being one algorithm among the two complementary algorithms of a symmetric-key cryptographic scheme.

In some embodiments, at least one intermediate stage of the key ladder takes controlling data associated with a digital certificate as input data for generating a respective intermediate key used by a next stage of the key ladder.

There is thus no need to store the entire certificate in a memory of the device: only the controlling data needs to be stored. This saves memory in the device implementing the key ladder.

In some embodiments, the digital certificate belongs to a certificates chain, the controlling data of at least one digital certificate in the chain being taken as input data for the at least one intermediate level of the key ladder for generating the respective intermediate key used by the next stage of the key ladder.

Thus, the key ladder replaces the chain of certificates while saving memory as only the controlling data of the certificates need to be stored in a memory of the device.

In some embodiments, for at least one digital certificate, the device is configured for not storing in a memory of the device:
- a key associated to the digital certificate; and/or
- a digital signature of the digital certificate.

In some embodiments, at least one intermediate stage of the key ladder takes controlling data associated with the block of data as input data for generating a respective intermediate key used by a next stage of the key ladder.

Thus, the controlling data associated with the block of data are authenticated at the same time as the block of data itself. Indeed, any change in those controlling data would result in a wrong verification key and thus to a failure in the authentication of the block of data.

In some embodiments, the controlling data allow managing the digital rights associated with the block of data.

In some embodiments, the signature algorithm is not implemented in the device.

By construction, this prevents from using the shared key with the signature algorithm.

In some embodiments, the reference data is the block of authentic data, the test data being the block of data.

In some embodiments, the reference data is a digest of the block of data resulting of the application of a Hash function to the block of data. The comparing the reference data with test data comprises: hashing the block of data using the Hash function delivering the test data.

### 4. LIST OF FIGURES

Other features and advantages of embodiments shall appear from the following description, given by way of indicative and non-exhaustive examples and from the appended drawings, of which:
- Figure 1 illustrates a flowchart of a method for authenticating a block of data according to one embodiment of the present disclosure;
- Figure 2 illustrates a key ladder implemented in a device for authenticating a block of data according to one embodiment of the present disclosure;
- Figure 3, illustrates a tree of digital certificates comprising different certificates chains;
- Figure 3a, illustrates different fields of a digital certificate belonging to the tree of Figure 1; and
- Figure 4 illustrates an example of the structural blocks of the device of Figure 2 according to one embodiment of the present disclosure.

### 5. DETAILED DESCRIPTION

In all of the figures of the present document, the same numerical reference signs designate similar elements and steps.

The disclosed technique for allowing the authentication of data in a post-quantum context and on devices presenting limited computational resources relies on the use of symmetric cryptography. However, a device 400 configured for authenticating a block of data 120 according to the present technique is also configured for insuring that the shared key (i.e. the key used both for the encryption of the digital signature and for its decryption) cannot be used with the cryptographic algorithm used for the encryption of the digital signature. This allows preventing from using the device 400 for generating counterfeit signatures, e.g. digital signatures associated with corrupted data to be authenticated in place of the block of data 120 to be initially authenticated. Indeed, in this later case the authentication stage would be irrelevant as the counterfeit signature would always comply with the corrupted data.

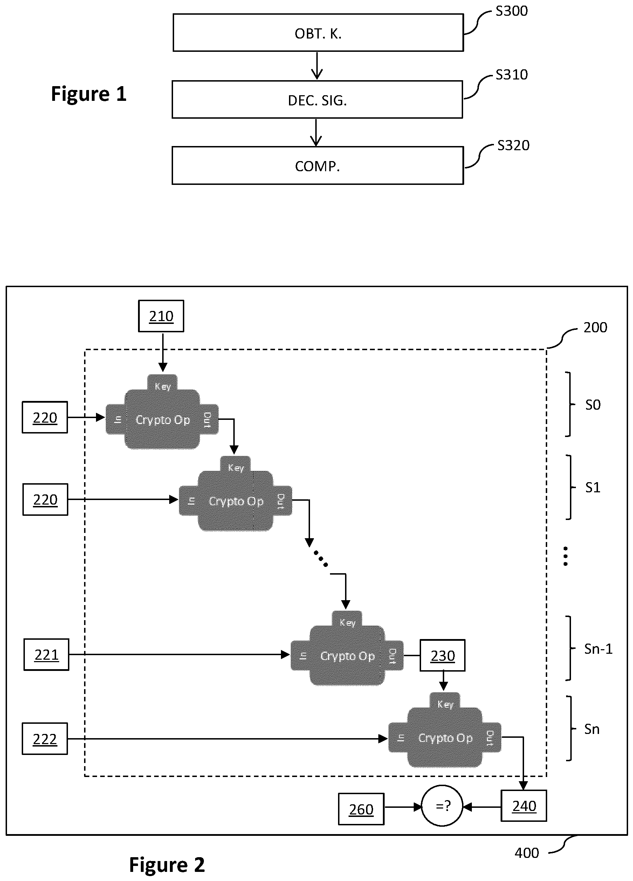

Referring now to **figure 1**, we present a method for authenticating a block of data 120 as a block of authentic data according to one embodiment of the present disclosure. Such method is executed by an electronic device 400 wherein a memory 403 of the device is populated with a digital signature 222 resulting of an application of one algorithm (i.e. the signature algorithm) to reference data associated with the block of authentic data (e.g. to the block of authentic data itself or to a digest of the block of authentic data) using a shared key 230. The signature algorithm is one algorithm among the two complementary algorithms of a symmetric-key cryptographic scheme.

In a **step S300**, the device 400 obtains the shared key 230. As discussed below in relation with Figure 2, the shared key 230 is e.g. read from the memory 403 of the device 400, or generated from a Root key 210 using a key ladder 200.

Back to Figure 1, in a **step S310**, the device 400 decrypts the signature 222 using the shared key 230 delivering the reference data 240 associated with the block of authentic data. More particularly, during the step S310, the device 400 executes the other algorithm (i.e. the verification algorithm) than the signature algorithm among the two complementary algorithms of the symmetric-key cryptographic scheme.

In a **step S320**, the device 400 compares the reference data 240 with test data 260 function of the block of data 120 delivering an information representative of the authenticity of the block of data 120. For instance, if the test data 260 is equal to the block of data 120, the information is representative of the fact that the block of data 120 has been considered authentic. Conversely, if the test data 260 is not equal to the block of data 120, the information is representative of the fact that the block of data 120 has not been considered authentic.

In some embodiments the reference data 240 is the block of authentic data. The test data 260 is the block of data 120 to be authenticated. In other embodiments, the reference data 240 is a digest of the block of authentic data. Such digest results e.g. of the application of a one-way function (e.g. a Hash function) to the block of authentic data. In this case, during the step S320, the device 400 applies the one-way function to the block of data 120 delivering the test data 260 to be compared to the reference data 240. It is noted that a one-way function is a function that is easy to compute on every input, but hard to invert given the image of a random input. Here, "easy" and "hard" are to be understood in the sense of computational complexity theory, specifically the theory of polynomial time problems. The one-way functions can be custom or standard one-way functions (e.g. SHA-256, HMAC-SHA256, ...).

It is noted that the two complementary algorithms of the symmetric-key cryptographic scheme comprise the algorithm for encryption (i.e. the signature algorithm) and the algorithm for decryption (i.e. the verification algorithm). The purpose of those two algorithms can be swapped. However, if one of the two algorithms is used for encryption (i.e. this algorithm is thus the signature algorithm used for obtaining the signature 222 from reference data associated with the block of authentic data), the other one of the two algorithms needs to be used for decryption (i.e. this algorithm is thus the verification algorithm used for obtaining the reference data associated with the block of authentic data from the signature 222), both using the shared key 230.

Back to Figure 1, the device 400 is configured for not allowing the use of the shared key 230 with the signature algorithm. Indeed, as discussed above, ensuring that the shared key 230 cannot be used with the signature algorithm allows preventing from using the device 400 for generating counterfeit digital signatures. This makes possible using a symmetric-key cryptographic scheme for authenticating data.

In some embodiments, the memory 403 of the device 400 is populated with the shared key 230, the device 400 being configured for associating, with the shared key 230, rights defining an interdiction to use the shared key 230 with the signature algorithm. It means e.g. that when receiving a command for executing a cryptographic algorithm using the shared key 230, the device 400 is configured for executing the cryptographic algorithm using the shared key 230 only if the cryptographic algorithm is different than the signature algorithm. For instance, when the device 400 receives a command requiring the use of the shared key 230 with a given algorithm, the device 400 checks the rights associated with the shared key 230. If the rights do not allow using the shared key 230 with the given algorithm, the device 400 does not execute the command.

Referring now to **figure 2**, we present a key ladder 200 implemented in the device 400 according to one embodiment of the present disclosure.

More particularly, such key ladder 200 comprises different intermediate stages S0, S1, ... Sn-1 for generating the shared key 230 from a Root Key 210. The last stage Sn-1 of the plurality of intermediate stages S0, S1, ... Sn-1 takes as input data the verification key 230 in an encrypted form 221. A given stage Sn of the key ladder 200 is configured for implementing the verification algorithm used for the decrypting the signature 222. In this case, the device 400 is thus configured for:
- during the step S300, having a plurality of successive intermediate stages S0, ..., Sn-1 of the key ladder 200 generating the shared key 230 from a Root key 210; and
- during the step S310, having the given stage Sn configured for using the shared key 230 generated by the successive intermediate stages S0, ..., Sn-1.

Thus, the verification algorithm is secured (e.g. the key ladder is implemented in a secure element or a cryptographic element of the device). Furthermore, there is no need to store the shared key 230 in a memory 403 of the device 400. The use of the key ladder 200 thus naturally protects the shared key 230 that is kept secret.

In the present embodiment, the given stage Sn is the stage following the last stage Sn-1 of the plurality of intermediate stages S0, S1, ... Sn-1. However, in other embodiments, another stage than the stage following the last stage Sn-1 of the plurality of intermediate stages S0, S1, ... Sn-1 can be used for implementing the verification algorithm used for decrypting the signature 222.

Back to figure 2, a plurality of intermediate stages S0, S1, ... Sn-1 are used for generating the shared key 230 from the Root Key 210. However, in other embodiments, only one intermediate stage is used for generating the shared key 230 from the Root Key 210.

In some embodiments, one (or more) intermediate stage S0, S1 of the key ladder implements a respective cryptographic algorithm for generating a corresponding intermediate key used by the next stage S1, ..., Sn-1 of the key ladder. For instance, the respective algorithm is one algorithm among the two complementary algorithms of a given symmetric-key cryptographic scheme.

Back to Figure 2, such intermediate stage S0, S1 of the key ladder 200 takes input data 220 for generating the respective intermediate key using the intermediate key generated by the previous intermediate stage. For instance, such input data 220 is e.g. predetermined data, or controlling data 110b associated with at least part of a digital certificate 110, or controlling data associated with the block of data 120 to be authenticated.

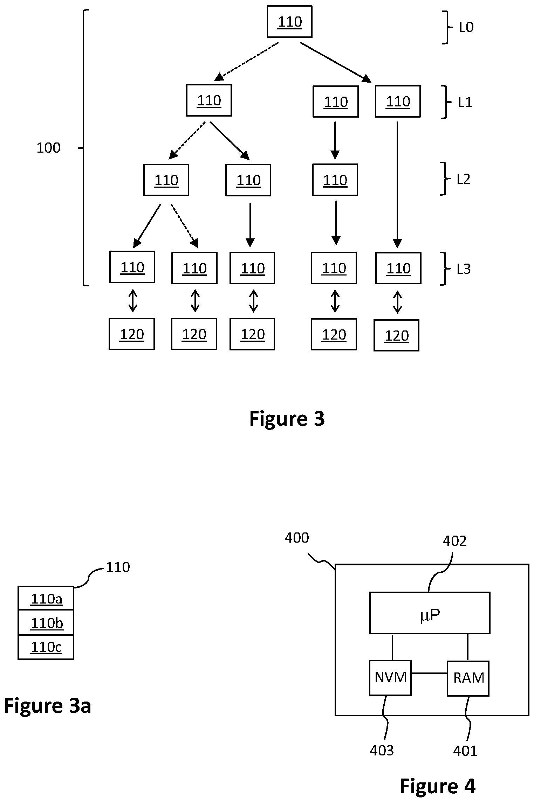

In order to details the controlling data 110b associated with digital certificates 110, we now present an example of a tree of digital certificates 110 as illustrated in **Figure 3****.** Such tree of digital certificates 110 is classically used to certify the validity (or authenticity) of the cryptographic key to be used for the authentication of a block of data 120 as a block of authentic data. Each path from the root certificate 110 (i.e. the certificate of level L0 in Figure 3) down to the certificate 110 (i.e. the certificate of level L3 in Figure 3) used for the authentication of a given block of data 120 is called a certificates chain (or chain of trust). For example, the certificates chain following the dashed arrows in Figure 3 starts from the root certificate 110 of level L0 and goes through a corresponding certificate 110 of level L1, through a corresponding certificate 110 of level L2, down to a corresponding leaf certificate 110 of level L3. Each element of the chain is used to authenticate the next one. Each arrow from one digital certificate 110 to the next digital certificate 110 corresponds to a digital signature verification operation. Such certificates chains can be used for the authentication of data based on symmetric key cryptographic algorithms.

More particularly, as illustrated in Figure 3a, such a digital certificate 110 is classically composed at least of:
- A first field comprising a key 110a used for verifying the signature of the next element in the chain (i.e. the signature of the next digital certificate 110 or the signature of the corresponding block of data 120 when the end of the chain is reached). The size of such key is typically up to 0.5 Kbytes for classical asymmetric key algorithms and several 10 Kbytes for post quantum asymmetric key algorithms;
- A second field comprising some controlling data 110b to manage the digital rights associated with the digital certificate 110. For example, a version number to manage possible revocations, some identifier to manage market segmentation, etc. The size of such controlling data is typically 10-20 bytes; and
- A third field comprising a digital signature 110c of the digital certificate 110 proving the authenticity of the other data of the certificate 110. The size of such digital signature is the same or close to the size of the key.

In the field of authentication of data embedded in a device, e.g. a piece of SW, such certificate (or chain of certificates) needs to be implemented in the device. However, as shown above, this requires a non-negligible amount of memory to store the certificate(s) whereas some devices may have a limited amount of such resources (e.g. loT devices, STB, ...).

Consequently, in some embodiments of the present disclosure, controlling data 110b associated with at least part of a digital certificate 110 are taken as input data 220 for generating the respective intermediate key used by the next stage S1, ..., Sn-1 of the key ladder 200. There is thus no need to store the entire certificate 110 in a memory 403 of the electronic device 400: only the controlling data 110b need to be stored. This saves memory space in the device 400 implementing the key ladder 200.

In some of those embodiments, the digital certificate 110 belongs to a certificates chain. The controlling data 110b of at least one digital certificate 110 in the chain are taken as input data for at least one intermediate stage S0, S1 of the key ladder 200 for generating its respective intermediate key used by a next stage S1, ..., Sn-1 of the key ladder 200. For instance, the controlling data 110b of successive digital certificates 110 in the chain may be taken as input data for successive intermediate stages S0, S1 of the key ladder 200 in a one-to-one correspondence between the digital certificates 110 of the chain and the intermediate stages S0, S1 of the key ladder 200. Alternatively, in some embodiments there is a 1-to-N mapping between the controlling data 110b of a digital certificate 110 in the chain and the input data of a plurality of intermediate stages S0, S1 of the key ladder 200. Conversely, in some embodiments there is a N-to-1 mapping between the controlling data 110b of a plurality of digital certificates 110 in the chain and the input data of an intermediate stage S0, S1 of the key ladder 200. Overall, the set of controlling data 110b of the digital certificates 110 in the chain corresponds to the set of input data of the intermediate stages S0, S1 of the key ladder 200. Thus, the key ladder 200 replaces the chain of certificates 110 while saving memory space as only the controlling data 110b of the digital certificates 110 need to be stored in a memory 403 of the electronic device 400. Consequently, in some embodiments, for at least one such digital certificate 110, the device 400 implementing the key ladder 200 is configured for not storing in a memory 403 of the device 400: a key 110a associated to the digital certificate 110 and/or a digital signature 110c of the digital certificate 110.

Conversely, in other embodiments, controlling data 110b associated with the block of data 120 to be authenticated are taken as input data 220 for generating the respective intermediate key used by a next stage S1, ..., Sn-1 of the key ladder. Thus, the controlling data associated with the block of data 120 are authenticated at the same time as the block of data 120 itself. Indeed, any change in those controlling data would result in a wrong verification key 230 and thus to a failure in the authentication of the block of data 120. For instance, such controlling data associated with the block of data 120 allow managing the digital rights associated with the block of data 120 (The controlling data comprise e.g. a version number to manage possible revocations, an identifier to manage market segmentation, etc. The block of data 120 is e.g. a piece of SW to be executed in the electronic device 400).

In some embodiments, input data 220 of different types (e.g. predetermined data, controlling data 110b associated with a digital certificate 110, controlling data associated with the block of data 120 to be authenticated, ...) are considered for different intermediate stages S0, S1 of the key ladder 200.

Referring now to **figure 4**, we illustrate an example of the structural blocks for the electronic device 400 that can be used for implementing the method for authenticating a block of data 120 according to the disclosure (according to any of the embodiments disclosed above).

In an embodiment, the device 400 comprises a non-volatile memory (NVM) 403 (e.g. a read-only memory (ROM), a hard disk, a flash memory, etc.), a volatile memory 401 (e.g. a random-access memory or RAM) and a processor 402. The non-volatile memory 403 is a non-transitory computer-readable carrier medium. It stores executable program code instructions, which are executed by the processor 402 in order to enable implementation of the method described above (method for authenticating a block of data 120) in the various embodiment disclosed above.

Upon initialization, the aforementioned program code instructions are transferred from the non-volatile memory 403 to the volatile memory 401 so as to be executed by the processor 402. The volatile memory 401 likewise includes registers for storing the variables and parameters required for this execution.

All the steps of the method for authenticating a block of data 120 according to the disclosure may be implemented equally well:
- by the execution of a set of program code instructions executed by a reprogrammable computing machine such as a PC type apparatus, a DSP (digital signal processor) or a microcontroller. This program code instructions can be stored in a non-transitory computer-readable carrier medium that is detachable (for example a CD-ROM, a DVD-ROM, a USB key) or non-detachable; or
- by a dedicated machine or component, such as an FPGA (Field Programmable Gate Array), an ASIC (Application-Specific Integrated Circuit) or any dedicated hardware component.

In other words, the disclosure is not limited to a purely software-based implementation, in the form of computer program instructions, but that it may also be implemented in hardware form or any form combining a hardware portion and a software portion.

In some embodiments, the signature algorithm is not implemented in the device 400. By construction, this prevents from using the shared key 230 with the signature algorithm.

## Claims

1. Device (400) for authenticating a block of data (120) as a block of authentic data, a memory (403) of the device being populated with a digital signature (222) resulting of an application of one algorithm, hereafter signature algorithm, to reference data associated with the block of authentic data using a shared key (230), the signature algorithm being one algorithm among the two complementary algorithms of a symmetric-key cryptographic scheme,
wherein the device is configured for:
- obtaining (S300) the shared key (230);
- decrypting (S310) the signature using the shared key delivering the reference data (240) associated with the block of authentic data, the decrypting the signature implementing the other algorithm, hereafter verification algorithm, than the signature algorithm among the two complementary algorithms of the symmetric-key cryptographic scheme; and
- comparing (S320) the reference data with test data (260) function of the block of data delivering an information representative of the authenticity of the block of data,
**characterized in that** the device is configured for not allowing the use of the shared key with the signature algorithm.

2. Device according to claim 1, wherein the memory of the device is populated with the shared key,
and wherein the device is configured for associating, with the shared key, rights defining an interdiction to use the shared key with the signature algorithm.

3. Device according to claim 1 or 2, configured for, when receiving a command for executing a cryptographic algorithm using the shared key: executing the cryptographic algorithm using the shared key only if the cryptographic algorithm is different than the signature algorithm.

4. Device according to claim 1, implementing a key ladder (200), a given stage (Sn) of the key ladder being configured for implementing the verification algorithm used for the decrypting the signature.

5. Device according to claim 4, configured for:
- during said obtaining the shared key, having a plurality of successive intermediate stages (S0, ..., Sn-1) of the key ladder generating the shared key (230) from a Root key (210); and
- during said decrypting the signature, having the given stage (Sn) configured for using the shared key generated by the successive intermediate stages.

6. Device according to claim 4 or 5, wherein at least one intermediate stage (S0, S1) of the key ladder takes controlling data (110b) associated with a digital certificate (110) as input data (220) for generating a respective intermediate key used by a next stage (S1, ..., Sn-1) of the key ladder.

7. Device according to claim 6, wherein the digital certificate belongs to a certificates chain, the controlling data of at least one digital certificate in the chain being taken as input data for the at least one intermediate level of the key ladder for generating the respective intermediate key used by the next stage (S1, ..., Sn-1) of the key ladder.

8. Device according to claim 6 or 7, wherein for at least one digital certificate, the device is configured for not storing in a memory of the device:
- a key associated to the digital certificate; and/or
- a digital signature of the digital certificate.

9. Device according to claim 4 or 5, wherein at least one intermediate stage (S0, S1) of the key ladder takes controlling data associated with the block of data as input data (220) for generating a respective intermediate key used by a next stage (S1, ..., Sn-1) of the key ladder.

10. Device according to claim 9, wherein the controlling data allow managing the digital rights associated with the block of data.

11. Device according to any of the claims 1 to 10, wherein the signature algorithm is not implemented in the device.

12. Device according to any of the claims 1 to 11, wherein the reference data is the block of authentic data, the test data being the block of data.

13. Device according to any of the claims 1 to 11, wherein the reference data is a digest of the block of data resulting of the application of a Hash function to the block of data,
and wherein the comparing the reference data with test data comprises: hashing the block of data using the Hash function delivering the test data.
